# EUROPEAN PATENT APPLICATION

(11) **EP 3 875 519 A1**
(43) Date of publication of application: **08.09.2021**
(21) Application number: 20160564.9
(22) Date of filing: 03.03.2020
(51) Int. Cl.: C08J 9/00, C08J 9/02

(54) **SILICONE RUBBER FOAM WITH THERMAL INSULATION PROPERTIES**

(71) Applicant: 3M Innovative Properties Company, Saint Paul, MN 55133-3427 (US)
(72) Inventor: Kempf, Michael, 41453 Neuss (DE); Konietzny, Roman, 41453 Neuss (DE); Kuhlmann, Rene, 41453 Neuss (DE); Plugge, Simon, 41453 Neuss (DE); Apeldorn, Thomas, 41453 Neuss (DE); Middendorf, Claus, 41453 Neuss (DE); Hoffmann, Björn, 41453 Neuss (DE); Kuesters, Christoph, 41453 Neuss (DE); Ostrowski, Karoline A., 41453 Neuss (DE); Bieber, Pierre Reinhard, 41453 Neuss (DE)
(74) Representative: Mathys & Squire

(57) **Abstract**

The present disclosure relates to a silicone rubber foam layer obtainable by a process comprising the steps of:
a) providing a substrate;
b) providing a first solid film and applying it onto the substrate;
c) providing a coating tool provided with an upstream side and a downstream side, wherein the coating tool is offset from the substrate to form a gap normal to the surface of the substrate;
d) moving the first solid film relative to the coating tool in a downstream direction;
e) providing a curable and foamable precursor of the silicone rubber foam to the upstream side of the coating tool thereby coating the precursor of the silicone rubber foam through the gap as a layer onto the substrate provided with the first solid film;
f) providing a second solid film and applying it along the upstream side of the coating tool, such that the first solid film and the second solid film are applied simultaneously with the formation of the adjacent layer of the precursor of the silicone rubber foam;
g) foaming or allowing the precursor of the silicone rubber foam to foam;
h) curing or allowing the layer of the precursor of the silicone rubber foam to cure thereby forming the silicone rubber foam layer;
i) optionally, exposing the layer of the precursor of the silicone rubber foam to a thermal treatment; and
j) optionally, removing the first solid film and/or the second solid film from the silicone rubber foam layer.

## Description

### Technical Field

The present disclosure relates generally to the field of polymeric foams, more specifically to the field of silicone rubber foam sheets having thermal insulation properties. The present disclosure also relates to a method of manufacturing such silicone rubber foam and to their use for industrial applications, in particular for thermal management applications in the automotive industry.

### Background

Automotive electrification is currently one of the biggest trends in the automotive industry. Within this trend, the propulsion of electric energy supplied by electric batteries and the development of suitable electric vehicle batteries as energy storage devices are the main focus in the automotive industry. Electric-vehicle batteries are used to power the propulsion system of battery electric vehicles (BEVs) and hybrid electric vehicles (HEVs). These batteries, which are typically lithium ion batteries, are designed with a high ampere hour capacity. The trend in the development of electric vehicle batteries goes to higher energy density in the battery (kWh/kg) to allow the covering of longer distances and to reducing charging times of the battery.

Due to the high energy density of electric vehicle batteries and the high energy flow during charging or discharging of the battery, there is a risk of creation of hot spots and thermal runaway events where the heat generated by the decomposition of battery cells propagates very rapidly to neighboring cells. This chain reaction might lead to the explosion or the fire catching of the whole electric vehicle.

In that context, the use of thermal management solutions has rapidly emerged as one way the mitigate the temperature rise in battery assemblies. One partial solution is disclosed in US-A1-2007/0259258 (Buck) which describes the use of heat absorbing material to absorb the heat generated by the battery cells of a battery pack assembly and transfer heat out from the case of the assembly thereby maintaining a lower temperature inside each battery pack and the overall battery assembly. Another partial solution is described in US-A1-2019393574 (Goeb et al.) which discloses the use of thermally conductive gap filler compositions comprising thermally conductive filler material for cooling battery assemblies.

### Summary

According to one aspect, the present disclosure relates to a silicone rubber foam layer obtainable by a process comprising the steps of:
a) providing a substrate;
b) providing a first solid film and applying it onto the substrate;
c) providing a coating tool provided with an upstream side and a downstream side, wherein the coating tool is offset from the substrate to form a gap normal to the surface of the substrate;
d) moving the first solid film relative to the coating tool in a downstream direction;
e) providing a curable and foamable precursor of the silicone rubber foam to the upstream side of the coating tool thereby coating the precursor of the silicone rubber foam through the gap as a layer onto the substrate provided with the first solid film;
f) providing a second solid film and applying it along the upstream side of the coating tool, such that the first solid film and the second solid film are applied simultaneously with the formation of the layer of the precursor of the silicone rubber foam;
g) foaming or allowing the precursor of the silicone rubber foam to foam;
h) curing or allowing the layer of the precursor of the silicone rubber foam to cure thereby forming the silicone rubber foam layer;
i) optionally, exposing the layer of the precursor of the silicone rubber foam to a thermal treatment; and
j) optionally, removing the first solid film and/or the second solid film from the silicone rubber foam layer.

According to another aspect, the present disclosure is directed to a process for manufacturing a silicone rubber foam layer, wherein the process comprises the steps of:
a) providing a substrate;
b) providing a first solid film and applying it onto the substrate;
c) providing a coating tool provided with an upstream side and a downstream side, wherein the coating tool is offset from the substrate to form a gap normal to the surface of the substrate;
d) moving the first solid film relative to the coating tool in a downstream direction;
e) providing a curable and foamable precursor of the silicone rubber foam to the upstream side of the coating tool thereby coating the precursor of the silicone rubber foam through the gap as a layer onto the substrate provided with the first solid film;
f) providing a second solid film and applying it along the upstream side of the coating tool, such that the first solid film and the second solid film are applied simultaneously with the formation of the layer of the precursor of the silicone rubber foam;
g) foaming or allowing the precursor of the silicone rubber foam to foam;
h) curing or allowing the layer of the precursor of the silicone rubber foam to cure thereby forming the silicone rubber foam layer;
i) optionally, exposing the layer of the precursor of the silicone rubber foam to a thermal treatment; and
j) optionally, removing the first solid film and/or the second solid film from the silicone rubber foam layer.

According to yet another aspect, the present disclosure relates to the use of a silicone rubber foam layer as described above, for industrial applications, in particular for thermal management applications in the automotive industry.

### Brief Description of the Drawings

**FIG. 1** is a schematic representation of one exemplary coating apparatus and a process of manufacturing a silicone rubber foam layer according to one exemplary aspect of the present disclosure.
**FIG. 2** is a schematic cross-sectional view of one exemplary coating tool useful in the present disclosure.
**FIG. 3** is a scanning electron microscope image of a cross section of an exemplary silicone rubber foam layer according to one aspect of the present disclosure.
**FIG. 4** illustrates an exemplary battery module assembly according to one aspect of the present disclosure.

### Detailed description

According to a first aspect, the present disclosure relates to a silicone rubber (non-syntactic) foam layer obtainable by a process comprising the steps of:
a) providing a substrate;
b) providing a first solid film and applying it onto the substrate;
c) providing a coating tool provided with an upstream side and a downstream side, wherein the coating tool is offset from the substrate to form a gap (substantially) normal to the surface of the substrate;
d) moving the first solid film relative to the coating tool in a downstream direction;
e) providing a curable and foamable precursor of the silicone rubber foam to the upstream side of the coating tool thereby coating the precursor of the silicone rubber foam through the gap as a layer onto the substrate provided with the first solid film;
f) providing a second solid film and applying it (at least partly) along the upstream side of the coating tool, such that the first solid film and the second solid film are applied (substantially) simultaneously with the formation of the (adjacent) layer of the precursor of the silicone rubber foam;
g) foaming or allowing the precursor of the silicone rubber foam to foam;
h) curing or allowing the layer of the precursor of the silicone rubber foam to cure thereby forming the silicone rubber foam layer;
i) optionally, exposing the layer of the precursor of the silicone rubber foam to a thermal treatment; and
j) optionally, removing the first solid film and/or the second solid film from the silicone rubber foam layer.

In the context of the present disclosure, it has been surprisingly found that a silicone rubber foam layer obtainable by a process as described above is provided with excellent thermal insulation properties, excellent heat resistance and stability even at temperatures up to 600°C and prolonged exposure to heat, excellent thermal runaway barrier performance, excellent compressibility and low density characteristics. The described silicone rubber foam layer is further characterized by one or more of the following advantageous benefits: a) excellent cushioning performance towards individual battery cells when used in battery assemblies; b) easy and cost-effective manufacturing method, based on readily available starting materials and minimized manufacturing steps; c) formulation simplicity and versatility; d) ability to efficiently cure without the need for any substantial energy input such as elevated temperature or actinic radiation; e) safe handling of the foam layer due to non-use of material or products having detrimental effects to the human body; f) excellent processability and converting characteristics into various forms, sizes and shapes; g) ability to be produced in relatively low thicknesses; g) ready-to-use foam layer in particular for thermal management applications; and g) ability to adhere to various substrates such as metallic or polymeric surfaces without requiring adhesion-promoting processing steps or compositions.

Those are particularly unexpected findings as thermal insulation and heat resistance stability are not expected to be obtained with compressible (soft) foam layers, in particular foam layers having a relatively low thickness.

In one advantageous aspect, the silicone rubber foam layer described herein is further provided with excellent flame resistance characteristics, as well as excellent resistance to surface cracking and surface brittleness even after prolonged exposure to temperatures up to 600°C.

Without wishing to be bound by theory, it is believed that these excellent characteristics and performance attributes are due in particular to the combination of the following technical features: a) the use of a curable and foamable precursor of a silicone rubber foam; b) the use of a coating tool; and c) the specific processing step consisting of providing a second solid film and applying it along the upstream side of the coating tool, such that the first solid film and the second solid film are applied simultaneously with the formation of the layer of the precursor of the silicone rubber foam, in particular before the foaming and curing steps have (substantially) started.

Still without wishing to be bound by theory, it is believed that this combination of technical features and in particular the step of applying the first solid film and the second solid film simultaneously with the formation of the layer of the precursor of the silicone rubber foam directly result into a silicone foamed layer provided with advantageous porous structure and foam morphology which translates into providing the above-detailed beneficial characteristics and performance attributes. More particularly, it is believed that this combination of technical features allows the foaming process to occur into a relatively controlled manner, whereby the gaseous cavities (or foam cells) would be allowed to expand in the direction of the foam layer thickness (i.e. in the direction perpendicular to the plane formed by the foam layer) thereby resulting into gaseous cavities having an oblong shape in the direction of the layer thickness and being homogeneously distributed in the resulting foam layer.

As such, the silicone rubber foam layer of the present disclosure is suitable for use in various industrial applications, in particular for thermal management applications. The silicone rubber foam layer of the present disclosure is particularly suitable for thermal management applications in the automotive industry, in particular as a thermal barrier, more in particular as a thermal runaway barrier. The silicone rubber foam layer as described herein is outstandingly suitable for use as a spacer having thermal runaway barrier properties in rechargeable electrical energy storage systems, in particular battery modules. Advantageously still, the silicone rubber foam layer of the disclosure may be used in the manufacturing of battery modules, in particular electric-vehicle battery modules and assemblies. In a beneficial aspect, the silicone rubber foam layer as described herein is suitable for manual or automated handling and application, in particular by fast robotic equipment, due in particular to its excellent dimensional stability and handling properties. The described silicone rubber foam layer is also able to meet the most challenging fire regulation norms due its outstanding flammability and heat stability characteristics.

In the context of the present disclosure, the term "adjacent" is meant to designate two superimposed films or layers which are arranged directly next to each other, i.e. which are abutting each other. The terms top and bottom layers or films, respectively, are used herein to denote the position of a layer or film relative to the surface of the substrate bearing such layer or film in the process of forming the silicone rubber foam layer. The direction into which the substrate is moving is referred to herein as downstream direction. The relative terms upstream and downstream describe the position along the extension of the substrate.

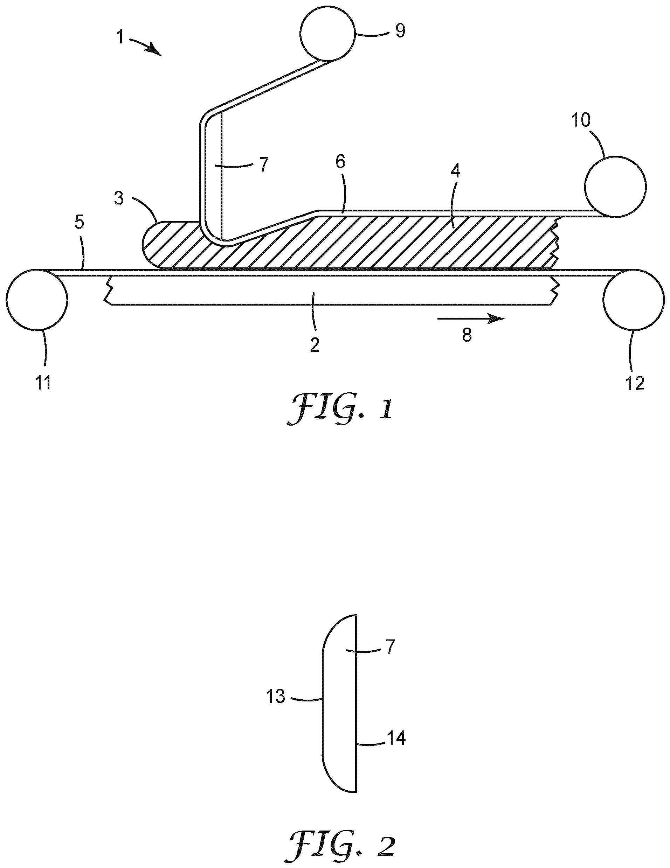

A schematic representation of an exemplary process of manufacturing a silicone rubber foam layer and a coating apparatus suitable for use in the manufacturing process is shown in **FIG. 1****.** The coating apparatus **1** comprises a substrate **2,** a coating tool **7** in the form of a coating knife, an unwinding roll **11** and a winding roll **12** for the first solid film **5,** an unwinding roll **9** and a winding roll **10** for the second solid film **6.** The downstream direction **8** in which the substrate **2** provided with the first solid film **5** is moved relative to the coating tool **7** is represented with an arrow accompanied with the corresponding reference numeral.

In a typical aspect of the disclosure, the curable and foamable precursor of the silicone rubber foam **3** is provided to the upstream side of the coating tool **7** thereby coating the precursor of the silicone rubber foam **3** through the gap as a layer onto the substrate **2** provided with the first solid film **5**. In **FIG.1**, the curable and foamable precursor of the silicone rubber foam **3** is represented as forming a so-called "rolling bead" at the upstream side of the coating tool **7.** The second solid film **6** is applied (at least partly) along the upstream side of the coating tool **7,** such that the first solid film **5** and the second solid film **6** are applied simultaneously with the formation of the layer of the precursor of the silicone rubber foam **3.** The layer of the precursor of the silicone rubber foam **3** is thereafter allowed to foam and cure resulting into the silicone rubber foam layer **4,** which is typically provided with the first solid film **5** on its bottom surface and with the second solid film **6** on its top surface. Optionally, the layer of the precursor of the silicone rubber foam **3** may be exposed to a thermal treatment, typically in an oven (not shown). In a typical aspect, the foaming of the layer of the precursor of the silicone rubber foam **3** results in a silicone rubber foam layer **4** having a thickness higher than the initial layer of the precursor of the silicone rubber foam **3.** After processing, the first solid film **5** and/or the second solid film **6** may be removed from the silicone rubber foam layer **4.**

Substrates for use herein are not particularly limited. Suitable substrates for use herein may be easily identified by those skilled in the art in the light of the present disclosure.

In a typical aspect of the disclosure, the substrate for use herein is a temporary support used for manufacturing purpose and from which the silicone rubber foam layer is separated and removed subsequent to foaming and curing. The substrate may optionally be provided with a surface treatment adapted to allow for a clean removal of the silicone rubber foam layer from the substrate (through the first solid film). Advantageously, the substrate for use herein and providing a temporary support may be provided in the form of an endless belt. Alternatively, the substrate for use herein may be a stationary (static) temporary support.

In one particular aspect of the disclosure, the silicone rubber foam layer obtained after foaming and curing is separated from the substrate and can be wound up, for example, into a roll.

According to one advantageous aspect of the disclosure, the substrate for use herein comprises a material selected from the group consisting of polymers, metals, ceramics, composites, and any combinations or mixtures thereof.

The silicone rubber foam layer of the disclosure is obtainable by a process using a coating tool provided with an upstream side and a downstream side. The coating tool is offset from the substrate to form a gap normal to the surface of the substrate.

Coating tools for use herein are not particularly limited. Any coating tools commonly known in the art may be used in the context of the present disclosure. Suitable coating tools for use herein may be easily identified by those skilled in the art in the light of the present disclosure.

The coating tools useful in the present disclosure each have an upstream side (or surface) and a downstream side (or surface). In a typical aspect, the coating tool for use herein is further provided with a bottom portion facing the surface of the substrate receiving the precursor of the silicone rubber foam. The gap is measured as the minimum distance between the bottom portion of the coating tool and the exposed surface of the substrate. The gap can be essentially uniform in the transverse direction (i.e. in the direction normal to the downstream direction) or it may vary continuously or discontinuously in the transverse direction, respectively. The gap between the coating tool and the surface of the substrate is typically adjusted to regulate the thickness of the respective coating in conjunction with other parameters including, for example, the speed of the substrate in the downstream direction, the type of the coating tool, the angle with which the coating tool is oriented relative to the normal of the substrate, and the kind of the substrate.

In one advantageous aspect of the disclosure, the gap formed by the coating tool from the substrate (coating tool gap) is in a range from 10 to 3000 micrometers, from 50 to 2500 micrometers, from 50 to 2000 micrometers, from 50 to 1500 micrometers, from 100 to 1500 micrometers, from 100 to 1000 micrometers, from 200 to 1000 micrometers, from 200 to 800 micrometers, or even from 200 to 600 micrometers.

The coating tool for use herein can be arranged substantially normal to the surface of the substrate, or it can be tilted whereby the angle between the substrate surface and the downstream side (or surface) of the coating tool is in arrange from 50° to 130°, or even from 80° to 100°. The coating tool useful in the present disclosure is typically solid and can be rigid or flexible. The coating tool for use herein may take various shapes, forms and sizes depending on the targeted application and expected characteristics of the silicone rubber foam layer.

In an advantageous aspect, the coating tool for use herein comprises a material selected from the group consisting of polymers, metals, ceramics, composites, glass, and any combinations or mixtures thereof. More advantageously, the coating tool for use herein comprises a material selected from the group consisting of metals, in particular aluminum, stainless steel, and any combinations thereof. Flexible coating tools for use herein are typically relatively thin and having in particular a thickness in the downstream direction in a range from 0.1 to 0.75 mm. Rigid coating tools for use herein are usually at least 1 mm, or even at least 3 mm thick.

According to a typical aspect of the disclosure, the coating tool for use herein is selected from the group consisting of coating knifes, coating blades, coating rolls, coating roll blades, and any combinations thereof.

In an advantageous aspect, the coating tool for use herein is selected from the group of coating knifes. It has been indeed found that the use of a coating tool in the form of a coating knife provides a more reproducible coating process and better-quality coating, which translates into a silicone rubber foam layer provided with advantageous properties.

According to another advantageous aspect, the cross-sectional profile of the bottom portion of the coating tool (in particular, a coating knife) in the longitudinal direction is designed so that the precursor layer is formed, and the excess precursor is doctored off. Typically, the cross-sectional profile of the bottom portion which the coating tool exhibits at its transversely extending edge facing the substrate, is essentially planar, curved, concave or convex.

An exemplary coating tool in the form of a coating knife is schematically represented in **FIG. 2** in a cross-sectional view, wherein the coating tool 7 is provided with an upstream side **13** and a downstream side **14.**

Precursors of the silicone rubber foam for use herein are not particularly limited, as long as they are curable and foamable. Any curable and foamable precursors of a silicone rubber foam commonly known in the art may be formally used in the context of the present disclosure. Suitable curable and foamable precursors of a silicone rubber foam for use herein may be easily identified by those skilled in the art in the light of the present disclosure.

According to an advantageous aspect, the precursor of the silicone rubber foam for use herein is an in-situ foamable composition, meaning that the foaming of the precursor occurs without requiring any additional compound, in particular external compound.

According to another advantageous aspect, the foaming of the precursor of the silicone rubber foam for use herein is performed with a gaseous compound, in particular hydrogen gas.

In a more advantageous aspect, the foaming of the precursor of the silicone rubber foam for use herein is performed by any of gas generation or gas injection.

According to a preferred aspect, the foaming of the precursor of the silicone rubber foam for use herein is performed by gas generation, in particular in-situ gas generation.

In an alternative and less advantageous aspect, the precursor of the silicone rubber foam for use herein further comprises an optional blowing agent.

According to a beneficial aspect, the precursor of the silicone rubber foam for use herein is a two-part composition. Typically, the precursor of the silicone rubber foam may be selected from the group consisting of addition curing type two-part silicone compositions, condensation curing type two-part silicone compositions, and any combinations or mixtures thereof.

In another beneficial aspect of the disclosure, the precursor of the silicone rubber foam for use herein comprises an organopolysiloxane composition.

In a preferred aspect, the precursor of the silicone rubber foam for use herein comprises an addition curing type two-part silicone composition, in particular an addition curing type two-part organopolysiloxane composition.

Suitable addition curing type two-part organopolysiloxane compositions for use herein as the precursor of the silicone rubber foam may be easily identified by those skilled in the art. Exemplary addition curing type two-part organopolysiloxane compositions for use herein are described e.g. in US Patent No. 4,593,049 (Bauman et al.).

According to a particularly advantageous aspect of the present disclosure, the precursor of the silicone rubber foam for use herein comprises:
a) at least one organopolysiloxane compound A;
b) at least one organohydrogenpolysiloxane compound B comprising at least two, in particular at least three hydrogen atoms per molecule;
c) at least one hydroxyl containing compound C;
d) an effective amount of a curing catalyst D, in particular a platinum-based curing catalyst; and
e) optionally, a foaming agent.

In an exemplary aspect, the at least one organopolysiloxane compound A for use herein has the following formula: 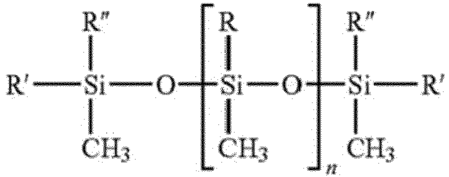 wherein:
R and R", are independently selected from the group consisting of C₁ to C₃₀ hydrocarbon radicals, and in particular R is an alkyl group chosen from the group consisting of methyl, ethyl, propyl, trifluoropropyl, and phenyl, and optionally R is a methyl group;
R' is a C₁ to C₂₀ alkenyl radical, and in particular R' is chosen from the group consisting of vinyl, allyl, hexenyl, decenyl and tetradecenyl, and more in particular R' is a vinyl radical;
R" is in particular an alkyl group such as a methyl, ethyl, propyl, trifluoropropyl, phenyl, and in particular R" is a methyl group; and
n is an integer having a value in a range from 5 to 1000, and in particular from 5 to 100.

In another exemplary aspect, the at least one hydroxyl containing compound C for use herein is selected from the group consisting of alcohols, polyols in particular polyols having 3 to 12 carbon atoms and having an average of at least two hydroxyl groups per molecule, silanols, silanol containing organopolysiloxanes, silanol containing silanes, water, and any combinations or mixtures thereof.

In still another exemplary aspect, the at least one hydroxyl containing compound C for use herein is selected from the group consisting of silanol containing organopolysiloxanes.

According to an advantageous aspect of the present disclosure, the silicone rubber foam layer of the disclosure is obtainable by a process wherein the step of providing a curable and foamable precursor of the silicone rubber foam to the upstream side of the coating tool is performed immediately prior to the step of providing a second solid film and applying it along the upstream side of the coating tool, such that the first solid film and the second solid film are applied (substantially) simultaneously with the formation of the (adjacent) layer of the precursor of the silicone rubber foam.

According to another advantageous aspect of the present disclosure, the step of foaming or allowing the precursor of the silicone rubber foam to foam and the step of curing or allowing the layer of the precursor of the silicone rubber foam to cure thereby forming the silicone rubber foam layer are performed (substantially) simultaneously.

The solid films for use herein as the first and the second solid films are not particularly limited. Any solid films commonly known in the art may be formally used in the context of the present disclosure. Suitable solid films for use herein may be easily identified by those skilled in the art in the light of the present disclosure.

According to one advantageous aspect, the first solid film and/or the second solid film for use in the present disclosure are impermeable films, in particular impermeable flexible films. As used herein, the term "impermeable" is meant to refer to impermeability to liquids and gaseous compounds, in particular to gaseous compounds.

According to another advantageous aspect of the disclosure, the first solid film and/or the second solid film for use herein are selected from the group consisting of polymeric films, metal films, composite films, and any combinations thereof.

In a more advantageous aspect of the disclosure, the first solid film and/or the second solid film for use herein are selected from the group consisting of polymeric films, in particular comprising a polymeric material selected from the group consisting of thermoplastic polymers.

In still a more advantageous aspect of the disclosure, the first solid film and/or the second solid film for use herein are polymeric films, wherein the polymeric material is selected from the group consisting of polyesters, polyethers, polyolefins, polyamides, polybenzimidazoles, polycarbonates, polyether sulfones, polyoxymethylenes, polyetherimides, polystyrenes, polyvinyl chloride, and any mixtures or combinations thereof.

In still a more advantageous aspect of the disclosure, the first solid film and/or the second solid film for use herein are polymeric films comprising a polymeric material selected from the group consisting of polyesters, polyolefins, polyetherimides, and any mixtures or combinations thereof.

In a particularly advantageous aspect, the first solid film and/or the second solid film for use in the present disclosure are polymeric films comprising a polymeric material selected from the group consisting of polyesters, in particular polyethylene terephthalate.

According to an advantageous aspect of the present disclosure, the silicone rubber foam layer of the disclosure is obtainable by a process wherein the first solid film is applied to the bottom surface of the layer of the precursor of the silicone rubber foam, and the second solid film is applied to the top (exposed) surface of the layer of the precursor of the silicone rubber foam.

In a typical aspect of the disclosure, the first solid film and/or the second solid film are contacted directly to the adjacent silicone rubber foam layer.

In another advantageous aspect of the present disclosure, the first major (top) surface and the second (opposite) major (bottom) surface of the silicone rubber foam layer and/or the first solid film and/or the second solid film are (substantially) free of any adhesion-promoting compositions or treatments, in particular free of priming compositions, adhesive compositions and physical surface treatments.

In still another advantageous aspect of the disclosure, no intermediate layers of any sorts are comprised in-between the first major (top) surface or the second (opposite) major (bottom) surface of the silicone rubber foam layer and the first solid film and/or the second solid film.

In a typical aspect of the disclosure, the first and second solid films are smoothly contacted to the corresponding surfaces of the silicone rubber foam layer in a snug fit thereby substantially avoiding (or at least substantially reducing) the inclusion of air between the solid films and the corresponding surfaces of the silicone rubber foam layer.

According to one advantageous aspect, the silicone rubber foam layer of the present disclosure comprises gaseous cavities, in particular gaseous hydrogen cavities, air gaseous cavities, and any mixtures thereof.

According to one advantageous aspect, the silicone rubber foam layer of the disclosure comprises gaseous cavities having a (substantially) oblong shape in the direction of the layer thickness (i.e. in the direction perpendicular to the plane formed by the foam layer).

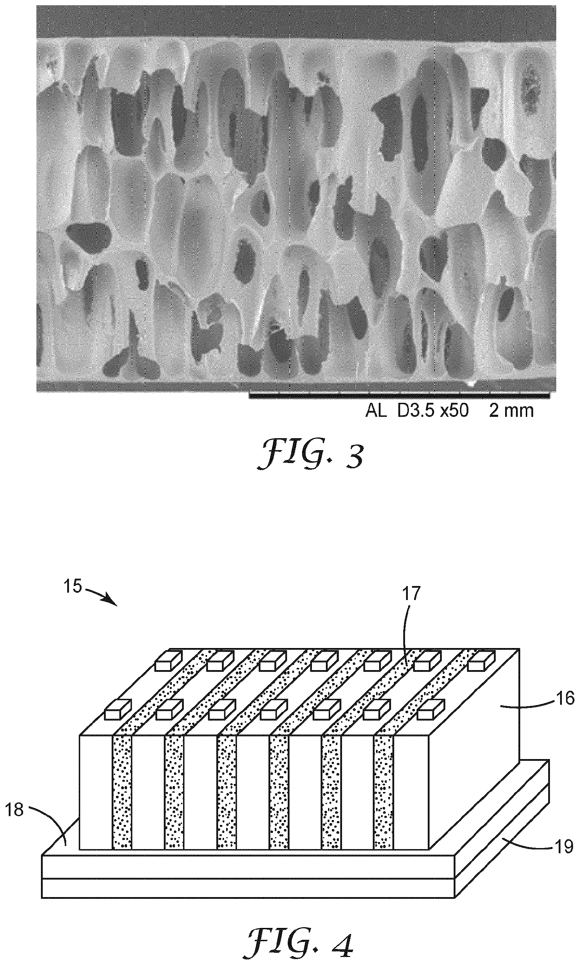

According to a more advantageous aspect, the gaseous cavities that may be present in the silicone rubber foam layer have an elongated oval shape in the direction of the layer thickness. Exemplary gaseous cavities having an elongated oval shape in the direction of the layer thickness are shown in **FIG. 3** which is a scanning electron microscope image of a cross section of an exemplary silicone rubber foam layer according to the present disclosure.

Advantageously still, the gaseous cavities for use herein are not surrounded by any ceramic or polymeric shell (other than the surrounding silicone polymer matrix).

In one particular aspect, the gaseous cavities for use herein have a mean average size (of the greatest dimension) no greater than 150 micrometers, no greater than 120 micrometers, no greater than 100 micrometers, no greater than 80 micrometers, no greater than 60 micrometers, no greater than 50 micrometers, no greater than 40 micrometers, no greater than 30 micrometers, or even greater than 20 micrometers (when calculated from SEM micrographs).

In another particular aspect, the gaseous cavities for use herein have a mean average size (of the greatest dimension) in a range from 5 to 3000 micrometers, from 5 to 2000 micrometers, from 10 to 1500 micrometers, from 20 to 1500 micrometers, from 20 to 1000 micrometers, from 20 to 800 micrometers, from 20 to 600 micrometers, from 20 to 500 micrometers, or even from 20 to 400 micrometers (when calculated from SEM micrographs).

According to a typical aspect, the silicone rubber foam layer of the disclosure is (substantially) free of hollow cavities selected from the group consisting of hollow microspheres, glass bubbles, expandable microspheres, in particular hydrocarbon filled expandable microspheres, hollow inorganic particles, expanded inorganic particles, and any combinations or mixtures thereof.

The silicone rubber foam layer of the disclosure may comprise additional (optional) ingredients or additives depending on the targeted application.

In a particular aspect of the disclosure, the silicone rubber foam layer may further comprise an additive which is in particular selected from the group consisting of flame retardants, softeners, hardeners, filler materials, tackifiers, nucleating agents, colorants, pigments, conservatives, rheology modifiers, UV-stabilizers, thixotropic agents, surface additives, flow additives, nanoparticles, antioxidants, reinforcing agents, toughening agents, silica particles, calcium carbonate, glass or synthetic fibers, thermally insulating particles, electrically conducting particles, electrically insulating particles, and any combinations or mixtures thereof.

In one beneficial aspect, the silicone rubber foam layer further comprises a non-flammable (or non-combusting) filler material. In a more beneficial aspect, the non-flammable filler material for use herein is selected from the group of inorganic fibers, in particular from the group consisting of mineral fibers, mineral wool, silicate fibers, ceramic fibers, glass fibers, carbon fibers, graphite fibers, asbestos fibers, aramide fibers, and any combinations or mixtures.

According to a more advantageous aspect, the non-flammable filler material for use herein is selected from the group consisting of mineral fibers, silicate fibers, ceramic fibers, asbestos fibers, aramide fibers, and any combinations or mixtures.

According to a particularly beneficial aspect, the non-flammable filler material for use herein is selected from the group consisting of mineral fibers. In the context of the present disclosure, it has indeed surprisingly been discovered that a silicone rubber foam which further comprises mineral fibers are provided with excellent thermal resistance and thermal stability characteristics, as well as improved resistance to surface cracking and surface brittleness even after prolonged exposure to temperatures up to 600°C. Without wishing to be bound by theory, it is believed that these beneficial characteristics are due in particular to the excellent compatibility of the mineral fibers (in particular silicate fibers) with the surrounding silicone polymeric matrix, which participates in densifying and mechanically stabilizing the resulting matrix.

In a particular aspect of this execution, the non-flammable filler material for use herein is comprised in the silicone rubber foam in an amount ranging from 0.5 to 40 wt.%, from 1 to 30 wt.%, from 1 to 20 wt.%, from 1 to 10 wt.%, from 1 to 8 wt.%, from 2 to 8 wt.%, from 2 to 6 wt.%, or even from 3 to 6 wt.%, based on the overall weight of the precursor composition of the silicone rubber foam.

In another typical aspect, the silicone rubber foam layer of the present disclosure is (substantially) free of thermally conductive fillers.

According to one advantageous aspect of the disclosure, the silicone rubber foam layer has a density no greater than 500 kg/m³, no greater than 450 kg/m³, no greater than 400 kg/m³, no greater than 380 kg/m³, no greater than 350 kg/m³, no greater than 320 kg/m³, no greater than 300 kg/m³, no greater than 280 kg/m³, no greater than 250 kg/m³, no greater than 220 kg/m³, or even no greater than 200 kg/m³, when measured according to the method described in the experimental section.

According to another advantageous aspect of the disclosure, the silicone rubber foam layer has a density in a range from 200 to 500 kg/m³, from 200 to 450 kg/m³, from 200 to 400 kg/m³, from 200 to 380 kg/m³, from 200 to 350 kg/m³, from 200 to 320 kg/m³, from 200 to 300 kg/m³, from 200 to 280 kg/m³, or even from 200 to 250 kg/m³, when measured according to the method described in the experimental section.

According to still another advantageous aspect of the disclosure, the silicone rubber foam layer has a hardness (Shore 00) greater than 10, greater than 15, greater than 20, greater than 25, or even greater than 30.

According to still another advantageous aspect of the disclosure, the silicone rubber foam layer has a hardness (Shore 00) in a range from 10 to 80, from 10 to 70, from 20 to 70, from 25 to 60, from 25 to 55, from 30 to 55, from 30 to 50, from 30 to 45, or even from 30 to 40.

According to still another advantageous aspect of the disclosure, the silicone rubber foam layer has a compression value of at least 60% with a compression force of no greater than 250 kPa, no greater than 200 kPa, no greater than 150 kPa, or even no greater than 100 kPa, when measured according to the test method described in the experimental section.

According to still another advantageous aspect of the disclosure, the silicone rubber foam layer has a heat transfer time to 150°C greater than 20 seconds, greater than 40 seconds, greater than 60 seconds, greater than 80 seconds, greater than 100 seconds, greater than 120 seconds, greater than 140 seconds, greater than 150 seconds, greater than 160 seconds, greater than 170 seconds, or even greater than 180 seconds, when measured according to the test method described in the experimental section.

According to still another advantageous aspect of the disclosure, the silicone rubber foam layer has a heat transfer time to 150°C in a range from 20 to 600 seconds, from 40 to 600 seconds, from 60 to 500 seconds, from 100 to 500 seconds, from 120 to 400 seconds, from 140 to 300 seconds, from 160 to 200 seconds, or even from 160 to 180 seconds, when measured according to the test method described in the experimental section.

According to yet another advantageous aspect of the disclosure, the silicone rubber foam layer has a thermal conductivity no greater than 1 W/m/K, no greater than 0.8 W/m/K, no greater than 0.6 W/m/K, no greater than 0.5 W/m/K, no greater than 0.4 W/m/K, no greater than 0.3 W/m/K, no greater than 0.2 W/m/K, or even no greater than 0.1 W/m/K, when measured according to the test method described in the experimental section.

According to yet another advantageous aspect of the disclosure, the silicone rubber foam layer has a thermal conductivity in a range from 0.005 to 1 W/m/K, from 0.01 to 1 W/m/K, from 0.02 to 1 W/m/K, or even from 0.02 to 0.8 W/m/K, when measured according to the test method described in the experimental section.

According to yet another advantageous aspect of the disclosure, the silicone rubber foam layer (substantially) undergoes a ceramification process at a temperature no greater than 500°C, no greater than 450°C, no greater than 400°C, no greater than 350°C, no greater than 300°C, or even no greater than 250°C.

According to yet another advantageous aspect of the disclosure, the silicone rubber foam layer (substantially) undergoes a ceramification process at a temperature in a range from 200°C to 450°C, from 200°C to 400°C, from 200°C to 350°C, from 250°C to 350°C, or even from 250°C to 300°C.

In the context of the present disclosure, it has indeed surprisingly been discovered that a silicone rubber foam layer which has the ability to undergo a ceramification process, in particular at a relatively low temperature, is provided with excellent thermal resistance and thermal stability characteristics.

According to still another advantageous aspect of the disclosure, the silicone rubber foam layer has a V-0 classification, when measured according to the UL-94 standard flammability test method.

In one advantageous aspect, the silicone rubber foam layer of the present disclosure has a thickness no greater than 6000 micrometers, no greater than 5000 micrometers, no greater than 4000 micrometers, no greater than 3000 micrometers, no greater than 2500 micrometers, no greater than 2000 micrometers, or even no greater than 1500 micrometers.

In another advantageous aspect, the silicone rubber foam layer of the present disclosure has a thickness in a range from 100 to 6000 micrometers, from 200 to 5000 micrometers, from 300 to 5000 micrometers, from 300 to 4500 micrometers, from 300 to 4000 micrometers, from 500 to 4000 micrometers, from 500 to 3000 micrometers, from 500 to 2500 micrometers, from 500 to 2000 micrometers, from 500 to 1500 micrometers, from 800 to 1500 micrometers. or even from 1000 to 1500 micrometers.

According to one particular aspect of the disclosure, the silicone rubber foam layer may be provided with the first solid film and/or the second solid film. In an alternative execution, the silicone rubber foam layer may not be provided with any of the first solid film and/or the second solid film.

As will be apparent to those skilled in the art, the silicone rubber foam layer of the present disclosure may take various forms, shapes and sizes depending on the targeted application. Similarly, the silicone rubber foam layer of the present disclosure may be post-processed or converted as it is customary practice in the field.

According to one exemplary aspect, the silicone rubber foam layer of the disclosure may take the form of a roll which is wound, in particular level-wound, around a core. The silicone rubber foam layer in the wound roll may or may not be provided with the first solid film and/or the second solid film.

According to one exemplary aspect, the silicone rubber foam layer of the disclosure may be cut into smaller pieces of various forms, shapes and sizes.

According to another aspect, the present disclosure is directed to a process for manufacturing a silicone rubber foam layer, wherein the process comprises the steps of:
a) providing a substrate;
b) providing a first solid film and applying it onto the substrate;
c) providing a coating tool provided with an upstream side and a downstream side, wherein the coating tool is offset from the substrate to form a gap normal to the surface of the substrate;
d) moving the first solid film relative to the coating tool in a downstream direction;
e) providing a curable and foamable precursor of the silicone rubber foam to the upstream side of the coating tool thereby coating the precursor of the silicone rubber foam through the gap as a layer onto the substrate provided with the first solid film;
f) providing a second solid film and applying it along the upstream side of the coating tool, such that the first solid film and the second solid film are applied simultaneously with the formation of the layer of the precursor of the silicone rubber foam;
g) foaming or allowing the precursor of the silicone rubber foam to foam;
h) curing or allowing the layer of the precursor of the silicone rubber foam to cure thereby forming the silicone rubber foam layer;
i) optionally, exposing the layer of the precursor of the silicone rubber foam to a thermal treatment; and
j) optionally, removing the first solid film and/or the second solid film from the silicone rubber foam layer.

All the particular and preferred aspects relating to, in particular, the substrate, the first and second solid film, the coating tool, the gap, the curable, foamable precursor of the silicone rubber foam, the optional ingredients, as well as to the various processing steps which were described hereinabove in the context of the silicone rubber foam layer, are fully applicable to the process for manufacturing a silicone rubber foam layer.

According to an advantageous aspect of the process of the disclosure, the first solid film is applied to the bottom surface of the layer of the precursor of the silicone rubber foam, and the second solid film is applied to the top (exposed) surface of the layer of the precursor of the silicone rubber foam.

According to another advantageous aspect of the process of the disclosure, the step of providing a curable and foamable precursor of the silicone rubber foam to the upstream side of the coating tool is performed immediately prior to the step of providing a second solid film and applying it along the upstream side of the coating tool, such that the first solid film and the second solid film are applied (substantially) simultaneously with the formation of the (adjacent) layer of the precursor of the silicone rubber foam.

According to still another advantageous aspect of the process of the disclosure, the step of foaming or allowing the precursor of the silicone rubber foam to foam and the step of curing or allowing the layer of the precursor of the silicone rubber foam to cure thereby forming the silicone rubber foam layer are performed (substantially) simultaneously.

According to still another advantageous aspect of the disclosure, the process is a continuous process whereby the curable and foamable precursor of the silicone rubber foam is continuously provided to the upstream side of the coating tool, in particular from a continuous dispensing device.

According to still another advantageous aspect of the disclosure, the process is a non-continuous process whereby the curable and foamable precursor of the silicone rubber foam is provided to the upstream side of the coating tool discontinuously, in particular from a non-continuous dispensing device.

In still another beneficial aspect of the process, the step of moving the substrate provided with the first solid film relative to the coating tool in a downstream direction is performed at a speed (web speed) in a range from 0.1 to 50 m/min, from 0.1 to 40 m/min, from 0.1 to 30 m/min, from 0.1 to 20 m/min, from 0.1 to 10 m/min, from 0.1 to 8 m/min, from 0.1 to 6 m/min, from 0.1 to 5 m/min, from 0.2 to 5 m/min, from 0.2 to 4 m/min, from 0.3 to 3 m/min, from 0.3 to 2 m/min, from 0.4 to 2 m/min, from 0.4 to 1 m/min, or even from 0.5 to 1 m/min.

In yet another beneficial aspect of the process, the step of providing the curable and foamable precursor of the silicone rubber foam to the upstream side of the coating tool is performed at a throughput in a range from 0.5 to 100 kg/h, from 0.5 to 80 kg/h, from 0.5 to 60 kg/h, from 0.5 to 50 kg/h, from 0.5 to 40 kg/h, 0.5 to 30 kg/h, from 0.5 to 25 kg/h, from 0.5 to 20 kg/h, from 0.5 to 15 kg/h, from 1 to 15 kg/h, from 1.5 to 15 kg/h, from 1.5 to 10 kg/h, from 2 to 10 kg/h, from 2 to 8 kg/h, or even from 2 to 6 kg/h.

In yet another beneficial aspect of the process, the step of providing the curable and foamable precursor of the silicone rubber foam to the upstream side of the coating tool is performed with a coating weight in a range from 10 to 5000 g/m², from 50 to 5000 g/m², from 50 to 4000 g/m², from 50 to 3000 g/m², from 100 to 3000 g/m², from 100 to 2500 g/m², from 150 to 2500 g/m², from 150 to 2000 g/m², from 150 to 1500 g/m², from 150 to 1000 g/m², or even from 200 to 1000 g/m².

In yet another beneficial aspect of the process, the step of foaming or allowing the precursor of the silicone rubber foam to foam is performed at a temperature no greater than 100°C, no greater than 90°C, no greater than 80°C, no greater than 70°C, no greater than 60°C, no greater than 50°C, no greater than 40°C, or even no greater than 30°C.

Advantageoulsy still, the step of foaming or allowing the precursor of the silicone rubber foam to foam is performed at a temperature in a range from 15°C to 40°C, or even from 20°C to 30°C.

Advantageoulsy still, the step of foaming or allowing the precursor of the silicone rubber foam to foam is performed with a gaseous compound, in particular hydrogen.

According to another advantageous aspect of the process, the step of foaming or allowing the precursor of the silicone rubber foam to foam is performed by any of gas generation or gas injection, in particular gas generation.

According to still another advantageous aspect of the process, the step of curing or allowing the layer of the precursor of the silicone rubber foam to cure is performed at a temperature no greater than 60°C, no greater than 50°C, no greater than 40°C, or even no greater than 30°C.

Advantageoulsy still, the step of curing or allowing the layer of the precursor of the silicone rubber foam to cure is performed at a temperature in a range from 15°C to 40°C, or even from 20°C to 30°C.

Advantageoulsy still, the step of curing or allowing the layer of the precursor of the silicone rubber foam to cure is performed at a temperature in a range from 40°C to 100°C, from 50°C to 100°C, from 60°C to 100°C, from 60°C to 90°C, or even from 70°C to 90°C.

In yet another advantageous aspect of the disclosure, the curable precursor of the silicone rubber foam is curable at 23°C at a curing percentage greater than 90%, greater than 95%, greater than 98%, or even greater than 99%, after a curing time no greater than 72 hours, no greater than 48 hours, or even no greater than 24 hours.

In yet another advantageous aspect of the disclosure, the curable precursor of the silicone rubber foam is curable at 23 °C at a curing percentage greater than 90%, greater than 95%, greater than 98%, or even greater than 99%, after a curing time no greater than 180 minutes, no greater than 210 minutes, no greater than 180 minutes, no greater than 150 minutes, no greater than 120 minutes, no greater than 100 minutes, no greater than 90 minutes, no greater than 80 minutes, no greater than 70 minutes, no greater than 60 minutes, no greater than 50 minutes, no greater than 40 minutes, or even no greater than 30 minutes.

In yet another advantageous aspect of the process of the disclosure, the precursor of the silicone rubber foam is as described above in the context of the silicone rubber foam layer.

According to another beneficial aspect of the process, the precursor of the silicone rubber foam is a two-part composition, in particular an addition curing type two-part silicone composition, more in particular an addition curing type two-part organopolysiloxane composition, and the precursor of the silicone rubber foam is obtained by mixing the two parts of the two-part silicone composition according to a dynamic mixing process.

According to another beneficial aspect of the process, the step of mixing the two parts of the two-part silicone composition is performed with a dynamic mixing device. Advantageoulsy still, the step of mixing the two parts of the two-part silicone composition is performed immediately prior to the step of providing the curable and foamable precursor of the silicone rubber foam to the upstream side of the coating tool.

In yet another advantageous aspect of the process of the disclosure, the first solid film and the second solid film are as described above in the context of the silicone rubber foam layer.

According to an advantageous aspect, the process of the disclosure is (substantially) free of any steps consisting of applying any adhesion-promoting compositions or adhesive compositions to the first major surface and the second (opposite) major surface of the silicone rubber foam layer and/or the first solid film and/or the second solid film.

According to another advantageous aspect, the process of the disclosure is (substantially) free of any steps consisting of (physically) treating the first major surface and the second (opposite) major surface of the silicone rubber foam layer and/or the first solid film and/or the second solid film to enhance their adhesion properties.

According to another aspect, the present disclosure is directed to a thermal barrier article comprising a silicone rubber foam layer as described above.

According to still another aspect, the present disclosure relates to a rechargeable electrical energy storage system, in particular a battery module, comprising a thermal barrier article as described above.

In yet another aspect, the present disclosure is directed to a battery module comprising a plurality of battery cells separated from each other by a gap, and a silicone rubber foam layer as described above positioned in the gap between the battery cells.

**FIG. 4** illustrates an exemplary assembled battery module **15** according to one aspect of the present disclosure, which comprises a plurality of battery cells **16** separated from each other by a gap, and a plurality of silicone rubber foam layers **17** positioned in the gap between the battery cells **16.** The battery module is further provided with a base plate **19** upon which is positioned a thermally conductive gap filler **18.**

Suitable battery modules, battery subunits and methods of manufacturing thereof for use herein are described e.g. in EP-A1-3352290 (Goeb et al.), in particular in FIG.1 to FIG.3 and in paragraphs [0016] to [0035], the content of which is herewith fully incorporated by reference.

According to another aspect, the present disclosure is directed to a method of manufacturing a battery module, which comprises the steps of:
a) providing a plurality of battery cells separated from each other by a gap; and
b) positioning a silicone rubber foam layer as described above in the gap between the battery cells.

According to still another aspect, the present disclosure relates to the use of a silicone rubber foam layer as described above for industrial applications, in particular for thermal management applications, more in particular in the automotive industry.

According to yet another aspect, the present disclosure relates to the use of a silicone rubber foam layer as described above as a thermal barrier, in particular a thermal runaway barrier.

In yet another aspect, the present disclosure relates to the use of a silicone rubber foam layer as described above as a thermal barrier, in particular a thermal runaway barrier, in a rechargeable electrical energy storage system, in particular a battery module.

In yet another aspect, the present disclosure relates to the use of a silicone rubber foam layer as described above as a thermal barrier spacer, in particular a thermal runaway barrier spacer, between the plurality of battery cells present in a rechargeable electrical energy storage system, in particular a battery module.

### EXAMPLES

The present disclosure is further illustrated by the following examples. These examples are merely for illustrative purposes only and are not meant to be limiting on the scope of the appended claims.

### Test Methods:

### 1) Thermal Stability Test

This test is performed in a muffle furnace at 600 °C. The test specimens are cut out of the sample sheets and placed in a porcelain crucible. The porcelain crucible is then placed in the furnace at 600 °C for 3 minutes, then taken out and allowed to cool down before being analyzed via microscopy. The weight loss of the sample after 3 minutes at 600°C (in %) is calculated.

### 2) Thermal Insulation Test

This test is performed using a tensile/compression tester from Zwick in compression mode. The compression tester is equipped with 2 plates (dimensions: 65x80x20mm WxLxH, made of Inconel® steel, the outer faces being thermally insulated): a cold (23°C) bottom plate equipped with a thermocouple to record temperature and a heated upper plate with a constant temperature of 600°C. At the beginning of the test, a heat shield is placed between the 2 plates. The sample is placed on the bottom cold plate, then the heat shield is removed. The upper plate is moved to a gap of 1000 micrometers between the 2 plates and the temperature increase of the cold plate is recorded over time. Specifically, the time when the cold plate reaches 150°C is recorded in seconds.

### 3) Thermal Conductivity Measurement

The thermal conductivity of the cured compositions is measured using the flash analysis method in a Netzsch Hyperflash LFA 467 (Netzsch, Selb, Germany) according to ASTM E1461/DIN EN821(2013). Samples of 1 mm thickness are prepared by coating of the curable composition between two PET release liners with a knife coater and curing at room temperature. The samples are then carefully cut to 10 mm x 10 mm squares with a knife cutter to fit in the sample holder. Before measurement, samples are coated with a thin layer of graphite (GRAPHIT 33, Kontakt Chemie) on both sides. In a measurement, the temperature of the top side of the sample is measured by an InSb IR detector after irradiation of a pulse of light (Xenon flash lamp, 230 V, 20-30 microsecond duration) to the bottom side. Diffusivity is then calculated from a fit of the thermogram by using the Cowan method. Three measurements are done for each sample at 23 °C. For each formulation, 3 samples are prepared and measured. The thermal conductivity is calculated from the thermal diffusivity, density and specific heat capacity of each sample. The thermal capacity (Cp) is calculated in Joules per gram per Kelvin using the Netzsch-LFA Hyper Flash in combination with a standard sample (Polyceram). The density (d) is determined in grams per cubic centimeter based on the weight and geometric dimensions of the sample. Using these parameters, the thermal conductivity (L) is calculated in Watts per meter • Kelvin according to L = a • d • Cp.

### 4) Flammability test

The test is performed using the UL-94 standard, the Standard for safety of Flammability of Plastic Materials for Parts in Devices and Appliances testing. The UL-94 standard is a plastics flammability standard released by Underwriters Laboratories of the United States. The standard determines the material's tendency to either extinguish or spread the flame once the specimen has been ignited. The UL-94 standard is harmonized with IEC 60707, 60695-11-10 and 60695-11-20 and ISO 9772 and 9773. The samples size which is a 75 mm x 150 mm sheet is exposed to a 2 cm, 50W tirrel burner flame ignition source. The test samples are placed vertically above the flame with the test flame impinging on the bottom of the sample. For each sample, the time to extinguish is measured and V ratings are assigned. V ratings are a measure to extinguish along with the sample not burning to the top clamp or dripping molten material which would ignite a cotton indicator, as shown in Table 1 below.

**Table 1: UL94 classification (V rating).**

| UL 94 classification | V-0 | V-1 | V-2 |
|---|---|---|---|
| Burning stops within | 10s | 30s | 30s |
| Drips of burning material allowed (ignites cotton ball) | No | No | Yes |
| Total burn of sample | No | No | No |

### 5) Compression Test

The compression test is performed using a tensile tester from Zwick in compression mode. The sample has a diameter of 50.8 mm and a thickness > 1000 micrometers. The test is performed at 23°C. The upper plate of the compression tester is moved with a speed of 1 mm/min until a maximum force of 2 MPa is reached. The compression force (in kPa) required to reach a compression value of at least 60% is recorded.

### 6) Coating Weight

The coating weight of the silicone rubber foam layers is measured by weighing a sample of 100 cm² cut out of the sample layer using a circle cutter. The coating weight is then converted in g/m².

### 7) Thickness

The thickness of the silicone rubber foam layers is measured using a thickness gauge.

### 8) Density

The density (in kg/m³) of the silicone rubber foam layers is calculated by dividing the coating weight of the foam layers (in kg/m²) by their thickness (in m).

### 9) SEM micrographs

The silicone rubber foam images are obtained from SEM micrographs recorded on a Tabletop Microscope TM3030, available from Hitachi High-Tech Corporation.

### Raw materials:

In the examples, the following raw materials are used:
**Dowsil 3-8235** is a 2-part room temperature curable silicone rubber foam formulation obtained from the Dow Chemical Company.
**Hostaphan RN 50/50** is a PET solid film obtained from Mitsubishi Polyester Film.
**CoatForce CF30** is a silicate fiber obtained from Rockwool B.V., The Netherlands.
**AFI PU Foam** is a polyurethane foam sheet with a thickness of about 2000 micrometers obtained from Aerofoam Industries and commercially available as a flame-retardant polymeric foam.

### Examples:

### General hand-made preparation method for the exemplary silicone rubber foam layers (Examples 1 to 2 and 4 to 5) and comparative example CE-1:

The exemplary hand-made silicone rubber foam layers are prepared according to the following procedure:
Dowsil 3-8235 parts A and B are filled in a 200mL two-part cartridge system from Adchem GmbH with a volumetric mixing ratio of 1:1 (200 ml F System cartridge). The two-part silicone system is mixed with a static mixer (MFH 10-18T) using a dispensing gun at 4 bar air pressure. After releasing 50 g of the mixed silicone in ajar, the mixture is additionally homogenized by hand using a wooden spatula for 10 seconds. This mixture is then coated with a knife coater between 2 layers of solid film Hostaphan, as represented in FIG.1. The obtained sheet begins to expand, and the reaction is completed by putting the sheet in a forced air oven at 80°C for 10 minutes.

The preparation of the exemplary silicone foam layer of Example 5 (comprising mineral fibers) comprises the pre-step of incorporating the mineral fibers CF30 to each part A and B of the the two-part formulation (5 wt.% in total, based on the weight of the overall formulation) using a speedmixer at a speed of 1500 rpm for 120 seconds, and then filling the resulting formulation in the 200mL two-part cartridge system.

The preparation of the silicone foam layer of comparative Example CE-1 (comprising a single solid film) differs from the general procedure described above, in that the precursor mixture is coated with a knife coater onto only one layer of solid film Hostaphan.

### General continuous preparation method for the exemplary silicone rubber foam layer (Example 3):

The exemplary continuously made silicone ruber foam layer is prepared according to the following procedure:
Dowsil 3-8235 parts A and B are filled in a special cartridge system equipped with a dynamic mixing head (3M 05846 Pneumatic Dynamic Mixing System obtainable from 3M). The cartridge has a 1:1 volumetric mixing ratio and an adapted dynamic mixing nozzle for 1:1 system (3M 05847 Dynamic Mixing Nozzles also obtained from 3M). By applying a pressure of 400 kPa, the piston of the dispensing equipment pushes the material through the nozzle that turns at 2000-3000 rpm. The throughput is 3.5 kg/h. A continuous bead of the dynamically mixed material is applied between 2 layers of solid film Hostaphan and pushed through a knife coater with a gap of 350 micrometers and a width of 18.5 cm, as represented in FIG.1. The web speed is 0.7 m/min.

### Exemplary silicone ruber foam layers (Examples 1 to 5) and comparative example CE-1:

The exemplary silicone ruber foam formulations are shown in Table 1, wherein all the complementary processing parameters are specified.

**Table 1:**

| Examples | Ex.1 | Ex.2 | Ex.3 | Ex.4 | Ex.5 | Ex. CE-1 |
|---|---|---|---|---|---|---|
| Coating knife gap (micrometers) | 700 | 350 | 350 | 250 | 350 | 250 |
| Coating weight (g/m²) | 995 | 530 | 280 | 445 | 550 | 250 |
| Final foam thickness (micrometers) | 4600 | 2300 | 1300 | 2150 | 2150 | 500 |

### Density

**Table 2: Results of density calculations.**

| Examples | Ex.1 | Ex.2 | Ex.3 | Ex.4 | Ex.5 | Ex. CE-1 |
|---|---|---|---|---|---|---|
| Density (kg/m³) | 220 | 230 | 220 | 210 | 255 | 510 |

As can be seen from the results shown in Table 2, the silicone rubber foam layers according to the present disclosure (Examples 1 to 5) are provided with low density values, whereas the silicone rubber layer of comparative example CE-1 (comprising only one solid film) is provided with a relatively high density value.

### Thermal stability performance

**Table 3: Results of the thermal stability performance test.**

| Examples | Ex.1 | AFI PU Foam |
|---|---|---|
| Weight loss after 3 min at 600°C (%) | 22 | 100 |

As can be seen from the results shown in Table 3, the silicone rubber foam layers according to the present disclosure are provided with excellent thermal stability performance, when compared to a comparative PU foam layer.

### Thermal insulation performance

**Table 4: Results of the thermal insulation performance test.**

| Examples | Ex.3 | Ex. 5 |
|---|---|---|
| Time to reach 150°C (seconds) | 180 | 180 |

As can be seen from the results shown in Table 4, the silicone rubber foam layers according to the present disclosure are provided with excellent thermal insulation performance.

### Compressibility performance

**Table 5: Results of the compressibility performance test.**

| Examples | Ex.2 | Ex. 5 |
|---|---|---|
| Compression force required to reach a compression value of at least 60% (in kPa) | 60 | 50 |

As can be seen from the results shown in Table 5, the silicone rubber foam layers according to the present disclosure are provided with excellent compressibility performance.

### Reduced surface cracking performance (microscopy observation)

The reduced surface cracking performance obtained while using a silicone rubber foam layer comprising a mineral fiber (Ex.5) when compared to the same silicone rubber foam layer not comprising a mineral fiber (Ex.2) is assessed by comparing magnified microscopy images of the corresponding silicone rubber foam layer surfaces. The sample surfaces used for the microscopy observation are those facing the hot plate and resulting from the thermal insulation performance test described above.

The reduced surface cracking performance obtained while using a silicone rubber foam layer comprising a mineral fiber when compared to the same silicone rubber foam layer not comprising a mineral fiber is clearly apparent from microscopy observation. The microscopy images show that the silicone rubber foam layer comprising a mineral fiber has a stable non-brittle surface with reduced cracking whereas the surface of the silicone rubber foam layer not comprising a mineral fiber is provided with deeper and more important cracking together with a brittle surface.

### Flammability performance

**Table 6: Results of the flammability performance test.**

| Examples | Ex.2 | Ex.3 | Ex.5 |
|---|---|---|---|
| Rating | V-0 | V-0 | V-0 |

As can be seen from the results shown in Table 6, the silicone rubber foam layers according to the present disclosure are provided with excellent flammability characteristics and obtain a V-0 rating according to the UL-94 standard flammability test.

## Claims

1. A silicone rubber foam layer obtainable by a process comprising the steps of:
a) providing a substrate;
b) providing a first solid film and applying it onto the substrate;
c) providing a coating tool provided with an upstream side and a downstream side, wherein the coating tool is offset from the substrate to form a gap normal to the surface of the substrate;
d) moving the first solid film relative to the coating tool in a downstream direction;
e) providing a curable and foamable precursor of the silicone rubber foam to the upstream side of the coating tool thereby coating the precursor of the silicone rubber foam through the gap as a layer onto the substrate provided with the first solid film;
f) providing a second solid film and applying it along the upstream side of the coating tool, such that the first solid film and the second solid film are applied simultaneously with the formation of the layer of the precursor of the silicone rubber foam;
g) foaming or allowing the precursor of the silicone rubber foam to foam;
h) curing or allowing the layer of the precursor of the silicone rubber foam to cure thereby forming the silicone rubber foam layer;
i) optionally, exposing the layer of the precursor of the silicone rubber foam to a thermal treatment; and
j) optionally, removing the first solid film and/or the second solid film from the silicone rubber foam layer.

2. A foam layer according to claim 1, wherein the foaming of the precursor of the silicone rubber foam is performed with a gaseous compound, in particular hydrogen.

3. A foam layer according to any of claim 1 or 2, wherein the precursor of the silicone rubber foam is selected from the group consisting of addition curing type two-part silicone compositions, condensation curing type two-part silicone compositions, and any combinations or mixtures thereof.

4. A foam layer according to any of the preceding claims, wherein the precursor of the silicone rubber foam comprises:
a) at least one organopolysiloxane compound A;
b) at least one organohydrogenpolysiloxane compound B comprising at least two, in particular at least three hydrogen atoms per molecule;
c) at least one hydroxyl containing compound C;
d) an effective amount of a curing catalyst D, in particular a platinum-based curing catalyst; and
e) optionally, a foaming agent.

5. A foam layer according to any of the preceding claims, wherein the first solid film and/or the second solid film are impermeable films, in particular impermeable flexible films.

6. A foam layer according to any of the preceding claims, wherein the first solid film and/or the second solid film are selected from the group consisting of polymeric films, metal films, composite films, and any combinations thereof.

7. A foam layer according to any of the preceding claims, wherein the first solid film and/or the second solid film are selected from the group consisting of polymeric films, in particular comprising a polymeric material selected from the group consisting of thermoplastic polymers.

8. A foam layer according to any of the preceding claims, which comprises gaseous cavities having an oblong shape in the direction of the layer thickness.

9. A foam layer according to any of the preceding claims, which further comprises a non-flammable filler material which is in particular selected from the group of inorganic fibers, in particular from the group consisting of mineral fibers, mineral wool, silicate fibers, ceramic fibers, glass fibers, carbon fibers, graphite fibers, asbestos fibers, aramide fibers, and any combinations or mixtures.

10. A foam layer according to any of the preceding claims, which has a density no greater than 500 kg/m³, no greater than 450 kg/m³, no greater than 400 kg/m³, no greater than 380 kg/m³, no greater than 350 kg/m³, no greater than 320 kg/m³, no greater than 300 kg/m³, no greater than 280 kg/m³, no greater than 250 kg/m³, no greater than 220 kg/m³, or even no greater than 200 kg/m³.

11. A process for manufacturing a silicone rubber foam layer, wherein the process comprises the steps of:
a) providing a substrate;
b) providing a first solid film and applying it onto the substrate;
c) providing a coating tool provided with an upstream side and a downstream side, wherein the coating tool is offset from the substrate to form a gap normal to the surface of the substrate;
d) moving the first solid film relative to the coating tool in a downstream direction;
e) providing a curable and foamable precursor of the silicone rubber foam to the upstream side of the coating tool thereby coating the precursor of the silicone rubber foam through the gap as a layer onto the substrate provided with the first solid film;
f) providing a second solid film and applying it along the upstream side of the coating tool, such that the first solid film and the second solid film are applied simultaneously with the formation of the layer of the precursor of the silicone rubber foam;
g) foaming or allowing the precursor of the silicone rubber foam to foam;
h) curing or allowing the layer of the precursor of the silicone rubber foam to cure thereby forming the silicone rubber foam layer;
i) optionally, exposing the layer of the precursor of the silicone rubber foam to a thermal treatment; and
j) optionally, removing the first solid film and/or the second solid film from the silicone rubber foam layer.

12. A process according to claim 11, wherein the step of providing a curable and foamable precursor of the silicone rubber foam to the upstream side of the coating tool is performed immediately prior to the step of providing a second solid film and applying it along the upstream side of the coating tool, such that the first solid film and the second solid film are applied simultaneously with the formation of the layer of the precursor of the silicone rubber foam.

13. A process according to any of claim 11 or 12, wherein the coating tool is selected from the group consisting of coating knifes, coating blades, coating rolls, coating roll blades, and any combinations thereof.

14. Use of a silicone rubber foam layer according to any of claims 1 to 10 for industrial applications, in particular for thermal management applications, more in particular in the automotive industry.

15. Use of a silicone rubber foam layer according to any of claims 1 to 10 as a thermal barrier, in particular a thermal runaway barrier, in a rechargeable electrical energy storage system, in particular a battery module.
